# EUROPEAN PATENT APPLICATION

(11) **EP 4 369 463 A1**
(43) Date of publication of application: **15.05.2024**
(21) Application number: 21967514.7
(22) Date of filing: 13.12.2021
(51) Int. Cl.: H01M 10/0587, H01M 10/04, H01M 4/13

(54) **ELECTRODE ASSEMBLY, BATTERY CELL, BATTERY AND ELECTRIC DEVICE**

(71) Applicant: Contemporary Amperex Technology Co., Limited, Ningde, Fujian 352100 (CN)
(72) Inventor: XU, Hu, Ningde, Fujian 352100 (CN); DONG, Jiao, Ningde, Fujian 352100 (CN); NIU, Shaojun, Ningde, Fujian 352100 (CN); LI, Xing, Ningde, Fujian 352100 (CN)
(74) Representative: Rowlands, Stuart Michael
(86) International application number: PCT/CN2021/137575
(87) International publication number: WO 2023/108372

(57) **Abstract**

Provided in embodiments of the present application are an electrode assembly, a battery cell, a battery and an electric device, which relate to the technical field of batteries. The electrode assembly comprises a first electrode plate and a second electrode plate with opposite polarities, wherein the first electrode plate and the second electrode plate are stacked and wound in a winding direction to form a winding structure, the first electrode plate is provided with a first winding starting end, and the first electrode plate comprises a first section and a second section which are continuously arranged in the winding direction, the first section being wound in the winding direction from the first winding starting end to form an inner ring layer, and the second section being wound in the winding direction from a connecting position between the second section and the first section to form an outer ring layer. The first section is provided with a reinforcing portion, which is wound to the connecting position in the winding direction and is used for reinforcing the first section. The reinforcing portion has a reinforcing effect on the first section, thereby enhancing the anti-deformation ability of the first section, so that the inner ring layer of the first electrode plate forms a relatively strong self-supporting structure, the anti-deformation capability of the inner ring layer is enhanced, and the risk of sinking deformation of the center of the electrode assembly is reduced, thereby effectively reducing lithium precipitation.

## Description

### Technical Field

The present disclosure relates to the technical field of batteries, in particular to an electrode assembly, a battery cell, a battery and an electrical apparatus.

### Background Art

With the development of new energy technology, batteries are used more and more widely, such as in mobile phones, notebook computers, battery cars, electric vehicles, electric planes, electric ships, electric toy cars, electric toy ships, electric toy planes and electric tools, etc.

As an energy storage element, the battery cell generally outputs electric energy through chemical reactions between the electrode assembly and the electrolyte. The electrode assembly generally includes a positive pole piece, a negative pole piece and an isolating membrane, and the positive pole piece, the negative pole piece and the isolating membrane are wound to form a wound structure. For the wound electrode assembly, lithium precipitation is likely to occur, which influences the service life of the battery cell.

### Summary

Embodiments of the present disclosure provide an electrode assembly, a battery cell, a battery and an electrical apparatus, which can reduce lithium precipitation and improve the service life of the battery cell.

In a first aspect, an embodiment of the present disclosure provides an electrode assembly, which includes a first pole piece and a second pole piece, wherein polarities of the first pole piece and the second pole piece are opposite, the first pole piece and the second pole piece are stacked, and are wound in a winding direction to form a wound structure; the first pole piece has a first winding starting end, the first pole piece includes a first segment and a second segment which are continuously arranged along the winding direction, the first segment is wound from the first winding starting end along the winding direction to form an inner turn layer, the second segment is wound from a connecting position where it is connected with the first segment along the winding direction to form an outer turn layer, and the outer turn layer is located outside the inner turn layer; and the first segment is provided with a reinforcing part, the reinforcing part is wound to the connecting position along the winding direction, and the reinforcing part is configured for reinforcing the first segment.

In the above technical solution, the first segment of the first pole piece is provided with the reinforcing part, the reinforcing part reinforces the first segment, thereby enhancing the deformation resistance of the first segment, enabling the inner turn layer of the first pole piece to form a strong self-supporting structure, enhancing the deformation resistance of the inner turn layer, and reducing the risk of central collapse and deformation of the electrode assembly, thereby effectively reducing lithium precipitation and prolonging the service life of the battery cell.

In some embodiments, the reinforcing part is partially beyond the first winding starting end, or one end of the reinforcing part which is away from the connecting position along the winding direction is aligned with the first winding starting end.

In the above technical solution, regardless of whether the reinforcing part is partially beyond the first winding starting end, or the end of the reinforcing part which is away from the connecting position is aligned with the first winding starting end, the reinforcing part covers the whole first segment, and the reinforcing part has good effect in reinforcing the whole first segment along the winding direction, so that the whole first segment has a good deformation resistance.

In some embodiments, the second pole piece has a second winding starting end; and the first pole piece includes a third segment, which is wound from the first winding starting end along the winding direction to a first alignment position aligned with the second winding starting end, the first alignment position is adjacent to the second winding starting end, and is located outside the second winding starting end, and the first segment forms at least a portion of the third segment.

In the above technical solution, the first segment is formed on at least a portion of the third segment, that is, the reinforcing part is arranged on the third segment. Since the third segment is wound from the first winding starting end to the first alignment position aligned with the second winding starting end along the winding direction, there is no second pole piece opposite to it inside the third segment, and the reinforcing part is arranged on the third segment, so that the third segment is not likely to hinder the ion transmission between the first pole piece and the second pole piece.

In some embodiments, the third segment includes a beyond segment beyond the second winding starting end, the beyond segment is wound from the first winding starting end along the winding direction to a second alignment position aligned with the second winding starting end, the second alignment position is adjacent to the second winding starting end, and is located inside the second winding starting end, and the first segment forms at least a portion of the beyond segment.

In the above technical solution, the first segment forms at least a portion of the beyond segment, that is, the reinforcing part is arranged on the beyond segment. Since the third segment is wound from the second winding starting end to the second alignment position aligned with the second winding starting end along the winding direction, there is no second pole piece opposite to it inside or outside the beyond segment, and the reinforcing part is arranged on the beyond segment, thereby further reducing the influence of the reinforcing part on the ion transmission between the first pole piece and the second pole piece. In addition, since the first segment forms at least a portion of the beyond segment, the diameter of each turn in the inner turn layer formed by the first segment is smaller, which makes the center of the electrode assembly more difficult to collapse.

In some embodiments, the reinforcing part is wound at least one turn along the winding direction.

In the above technical solution, the reinforcing part is wound at least one turn along the winding direction, so that the reinforcing part has a good effect in reinforcing the first segment, which makes the first segment have a good deformation resistance.

In some embodiments, the reinforcing part is wound one to five turns along the winding direction.

In the above technical solution, the reinforcing part is wound one to five turns along the winding direction, which not only has good effect in reinforcing the first segment, but also ensures that the length of the reinforcing part along the winding direction is not too long, thus reducing the space occupied by the reinforcing and reducing the influence of the reinforcing part on the energy density of the battery cell.

In some embodiments, the first pole piece includes a first current collector and a first active substance layer, the first active substance layer is arranged on a surface of the first current collector in a thickness direction, and at least one side of the first current collector in the thickness direction is provided with the reinforcing part; and the reinforcing part is arranged on one side of the first active substance layer of the first segment facing away from the first current collector, or the reinforcing part is arranged between the first active substance layer of the first segment and the first current collector.

In the above technical solution, if the reinforcing part is arranged on one side of the first active substance layer of the first segment facing away from the first current collector, the reinforcing part is located on the surface layer of the first segment, which is convenient for arranging the reinforcing part in the first segment. If the reinforcing part is arranged between the first active substance layer of the first segment and the first current collector, the reinforcing part is not likely to hinder the transmission of ions of the first active substance layer.

In some embodiments, the reinforcing part is an adhesive layer arranged on a surface of the first active substance layer of the first segment facing away from the first current collector.

In the above technical solution, the reinforcing part is an adhesive layer, which is convenient to be arranged on the surface of the first active substance layer. The adhesive layer is bonded to the surface of the first active substance layer, so that it is not likely to separate from the first active substance layer, and the reinforcing part always has a good effect in reinforcing the first segment.

In some embodiments, the reinforcing part is a second active substance layer coated on the first active substance layer of the first segment; and a total thickness of the second active substance layer and the first active substance layer of the first segment is greater than a thickness of the first active substance layer of the second segment.

In the above technical solution, the total thickness of the second active substance layer and the first active substance layer of the first segment is greater than the thickness of the first active substance layer of the second segment, so that the first segment is reinforced, which is simple to implement and has good economy. The second active substance layer is coated on the first active substance layer, so that the second active substance layer and the first active substance layer have a good integrity, which makes the first segment have a good deformation resistance.

In some embodiments, a hardness of the reinforcing part is greater than a hardness of the first active substance layer of the first segment.

In the above technical solution, the hardness of the reinforcing part is greater than the hardness of the first active substance layer of the first segment, so that the reinforcing part has a better deformation resistance than the first active substance layer, and the reinforcing part has a good effect in reinforcing the first segment to enhance the deformation resistance of the first segment.

In some embodiments, the first pole piece includes a first current collector and a first active substance layer, and the first active substance layer is arranged on a surface of the first current collector in a thickness direction; and the first current collector of the first segment is not provided with the first active substance layer, the surface of the first current collector of the first segment in the thickness direction is provided with the reinforcing part, and a hardness of the reinforcing part is greater than a hardness of the first active substance layer of the second segment.

In the above technical solution, the reinforcing part has a good effect in reinforcing the first current collector of the first segment, and the hardness of the reinforcing part is greater than the hardness of the first active substance layer of the second segment, so that the deformation resistance of the reinforcing part and the first current collector of the first segment as a whole is stronger than the deformation resistance of the second segment, so as to enhance the deformation resistance of the inner turn layer.

In some embodiments, the electrode assembly further includes a protective member arranged on the first pole piece and stacked with the first pole piece; and the first pole piece is further provided with a first winding ending end, and along the winding direction, one end of the protective member is aligned with the first winding ending end, or the protective member is partially beyond the first winding ending end.

In the above technical solution, the protective member has a protective effect on the first winding ending end of the first pole piece, so as to reduce the risk of short circuit caused by a sharp part destroying the isolating membrane at the first winding ending end of the first pole piece.

In some embodiments, the electrode assembly has a cylindrical structure.

In some embodiments, the electrode assembly includes a flat area and a bending area connected to the flat area; and the reinforcing part is at least partially located in the bending area.

In the above technical solution, the reinforcing part is at least partially located in the bending area, so that a portion of the first segment located in the bending area has a good bending resistance, which reduces the risk of inward collapse of the pole pieces in the bending area and effectively reduces lithium precipitation.

In a second aspect, an embodiment of the present disclosure provides a battery cell, which includes an electrode assembly provided in any one of the embodiments of the first aspect; and a housing, configured for accommodating the electrode assembly.

In a third aspect, an embodiment of the present disclosure provides a battery, which includes the battery cell provided in any one of the embodiments of the second aspect; and a case, configured for accommodating the battery cell.

In a fourth aspect, an embodiment of the present disclosure provides an electrical apparatus, which includes the battery provided in any one of the embodiments of the third aspect.

In a fifth aspect, an embodiment of the present disclosure provides a method for manufacturing an electrode assembly. The method includes: providing a first pole piece and a second pole piece, wherein polarities of the first pole piece and the second pole piece are opposite; and stacking the first pole piece and the second pole piece, and then winding the first pole piece and the second pole piece along a winding direction to form a wound structure, wherein the first pole piece has a first winding starting end, the first pole piece includes a first segment and a second segment which are continuously arranged along the winding direction, the first segment is wound from the first winding starting end along the winding direction to form an inner turn layer, the second segment is wound from a connecting position where it is connected with the first segment along the winding direction to form an outer turn layer, and the outer turn layer is located outside the inner turn layer; and the first segment is provided with a reinforcing part, the reinforcing part is wound to the connecting position along the winding direction, and the reinforcing part is configured for reinforcing the first segment.

In a sixth aspect, an embodiment of the present disclosure further provides an apparatus for manufacturing an electrode assembly. The apparatus includes: a providing device, configured for providing a first pole piece and a second pole piece, wherein polarities of the first pole piece and the second pole piece are opposite; and an assembling device, configured for stacking the first pole piece and the second pole piece, and then winding the first pole piece and the second pole piece along a winding direction to form a wound structure, wherein the first pole piece has a first winding starting end, the first pole piece includes a first segment and a second segment which are continuously arranged along the winding direction, the first segment is wound from the first winding starting end along the winding direction to form an inner turn layer, the second segment is wound from a connecting position where it is connected with the first segment along the winding direction to form an outer turn layer, and the outer turn layer is located outside the inner turn layer; and the first segment is provided with a reinforcing part, the reinforcing part is wound to the connecting position along the winding direction, and the reinforcing part is configured for reinforcing the first segment.

### Brief Description of Drawings

In order to illustrate the technical solutions of the embodiments of the present disclosure more clearly, the following drawings that need to be used in the embodiments will be briefly introduced. It is to be understood that the following drawings only show some embodiments of the present disclosure, so they shall not be regarded as limiting the scope. For those ordinarily skilled in the art, other relevant drawings may be obtained according to these drawings without creative efforts.
FIG. 1 is a structural schematic diagram of a vehicle provided by some embodiments of the present disclosure;
FIG. 2 is an explosion diagram of a battery provided by some embodiments of the present disclosure;
FIG. 3 is an exploded diagram of a battery cell provided by some embodiments of the present disclosure;
FIG. 4 is a structural schematic diagram of an electrode assembly provided by some embodiments of the present disclosure;
FIG. 5 is a structural schematic diagram of an electrode assembly provided by further embodiments of the present disclosure;
FIG. 6 is a structural schematic diagram of an electrode assembly provided by yet further embodiments of the present disclosure;
FIG. 7 is a structural schematic diagram of a first pole piece after being unfolded provided by some embodiments of the present disclosure;
FIG. 8 is a structural schematic diagram of a first pole piece after being unfolded provided by some other embodiments of the present disclosure;
FIG. 9 is a structural schematic diagram of a first pole piece after being unfolded provided by further embodiments of the present disclosure;
FIG. 10 is a structural schematic diagram of a first pole piece after being unfolded provided by yet further embodiments of the present disclosure;
FIG. 11 is a structural schematic diagram of an electrode assembly provided by some other embodiments of the present disclosure;
FIG. 12 is a structural schematic diagram of an electrode assembly provided by yet other embodiments of the present disclosure;
FIG. 13 is a flowchart of a method for manufacturing an electrode assembly provided by some embodiments of the present disclosure; and
FIG. 14 is a schematic block diagram of an apparatus for manufacturing an electrode assembly provided by some embodiments of the present disclosure.

Reference numerals: 10- case; 11- first part; 12- second part; 20- battery cell; 21- housing; 22- electrode assembly; 221- first pole piece; 221a- first current collector; 221 b- first active substance layer; 2211- first segment; 2212-second segment; 2212a- connecting position; 2213- inner turn layer; 2214-outer turn layer; 2215- first winding starting end; 2216- first winding ending end; 2217- third segment; 2217a- first alignment position; 2217b- second alignment position; 2218- beyond segment; 222- second pole piece; 2221-second winding starting end; 2222- second winding ending end; 223-reinforcing part; 2231- adhesive layer; 2232- second active substance layer; 224- isolating membrane; 225- protective member; 23- end cover; 24-electrode terminal; 25- current collecting member; 100- battery; 200- controller; 300- motor; 1000- vehicle; 2000- manufacturing apparatus; 2100- providing device; 2200- assembling device; A- flat area; B- bending area; X- winding direction; Z- thickness direction.

### Detailed Description of Embodiments

In order to make the objectives, technical solutions and advantages of the embodiments of the present disclosure clearer, the technical solutions in the embodiments of the present disclosure will be clearly described below with reference to the accompanying drawings in the embodiments of the present disclosure. It will be apparent that the described embodiments are some rather than all of the embodiments of the present disclosure. Based on the embodiments of the present disclosure, all other embodiment obtained by a person ordinarily skilled in the art without making creative efforts shall fall within the scope of protection of the present disclosure.

Unless otherwise defined, all technical and scientific terms used in the present disclosure have the same meaning as commonly understood by those skilled in the art of the present disclosure. The terms used in the specification of the present disclosure is merely for the purpose of describing specific embodiments, and is not intended to limit the present disclosure. The terms "include", "comprise" and "have" in the description, claims and the above description of drawings of the present disclosure, as well as any variations thereof, are intended to cover non-exclusive inclusion. The terms "first" and "second", etc. in the description and claims of the present disclosure or the above drawings are intended to distinguish different objects, but are not intended to describe a specific order or a primary and secondary relation.

Reference to "embodiment" in the present disclosure means that a particular feature, a structure or a characteristic described in conjunction with an embodiment may be included in at least one embodiment of the present disclosure. The occurrence of this phrase in various places in the specification does not necessarily refer to the same embodiment, nor is it an independent or alternative embodiment mutually exclusive with other embodiments.

In the description of the present disclosure, it should be noted that the terms "install", "mount", "connect" and "attach" should be broadly understood, for example, they may mean fixed connection, detachable connection or integrated connection, and may mean direct connection, or indirect connection through an intermediate medium, or internal communication between two elements. For those ordinarily skilled in the art, the specific meanings of the above terms in the present disclosure can be understood according to the specific circumstances.

In the present disclosure, the term "and/or" only indicates a relation describing the related objects, which indicates that there may be three kinds of relations. For example, "A and/or B" may indicate that A exists alone, A and B exist at the same time, or B exists alone. In addition, the character "/" in the present disclosure generally indicates that the contextual objects have an "OR" relation.

In the embodiments of the present disclosure, the same reference numerals indicate the same components, and for the sake of brevity, detailed descriptions of the same components are omitted in different embodiments. It should be understood that the dimensions such as the thickness, length and width of various components and the overall thickness, length and width of the integrated device in the embodiments of the present disclosure shown in the accompanying drawings are only illustrative, and should not constitute any limitation on the present disclosure.

In the present disclosure, "plurality of" refers to more than two (including two).

In the present disclosure, the battery cell may include a lithium-ion secondary battery, a lithium-ion primary battery, a lithium-sulfur battery, a sodium-lithium ion battery, a sodium-ion battery or a magnesium-on battery, etc., and embodiments of the present disclosure are not limited to this. The battery cell may have a cylindrical, flat, or rectangular shape or other shapes, and the embodiments of the present disclosure are not limited to this. The battery cells are generally divided into three types according to the packaging: cylindrical battery cells, square battery cells and pouch battery cells, and the embodiments of the present disclosure are not limited to this.

The battery mentioned in the embodiment of the present disclosure refers to a single physical module including one or more battery cells to provide higher voltage and capacity. For example, the battery mentioned in the present disclosure may include a battery module or a battery pack, etc. A battery generally includes a case for encapsulating one or more battery cells. The case can prevent liquid or other foreign matter from influencing the charging or discharging of the battery cell.

The battery cell includes an electrode assembly and electrolyte, and the electrode assembly is composed of a positive pole piece, a negative pole piece and an isolating membrane. The battery cell works mainly by metal ions moving between the positive pole piece and the negative pole piece. The positive pole piece includes a positive current collector and a positive active substance layer. The positive active substance layer is coated on the surface of the positive current collector, the positive current collector without the positive active substance layer protrudes from the positive current collector coated with the positive active substance layer, and the positive current collector without the positive active substance layer is used as a positive electrode tab. Taking a lithium ion battery as an example, the positive current collector may be made of aluminum, and the positive active substance may be lithium cobalt, lithium iron phosphate, lithium ternary or lithium manganate, etc. The negative pole piece includes a negative current collector and a negative active substance layer. The negative active substance layer is coated on the surface of the negative current collector, the negative current collector without the negative active substance layer protrudes from the negative current collector coated with the negative active substance layer, and the negative current collector without the negative active substance layer is used as a negative electrode tab. The negative current collector may be made of copper, and the negative active substance may be carbon or silicon, etc. In order to ensure that a large current can pass without fusing, a plurality of positive electrode tabs are stacked together, and a plurality of negative electrode tabs are stacked together. The material of the isolating membrane may be PP (polypropylene) or PE (polyethylene) , etc.

For the wound electrode assembly, after the positive pole piece, the isolating membrane and the negative pole piece are wound, a central hole will be formed in the central position of the electrode assembly. The inventors found that during the charging and discharging process of the electrode assembly, with the expansion and contraction of the pole pieces, the central position of the electrode assembly is very likely to collapse, the pole pieces at this position are likely to wrinkle after collapse, and the pole pieces at this position are uneven, which leads to a gully gap between the pole pieces, resulting in hindrance of ion transmission, and eventually lead to lithium precipitation.

In view of this, an embodiment of the present disclosure provides an electrode assembly. The first pole piece of the electrode assembly includes a first segment and a second segment which are continuously arranged along the winding direction. The first segment is wound from the first winding starting end along the winding direction to form an inner turn layer, the second segment is wound from a connecting position where it is connected to the first segment along the winding direction to form an outer turn layer, and the outer turn layer is located outside the inner turn layer. The first segment is provided with a reinforcing part, the reinforcing part is wound to the connecting position along the winding direction, and the reinforcing part is configured for reinforcing the first segment.

In such an electrode assembly, the first segment of the first pole piece is provided with a reinforcing part, the reinforcing part reinforces the first segment, thereby enhancing the deformation resistance of the first segment, enabling the inner turn layer of the first pole piece to form a strong self-supporting structure, enhancing the deformation resistance of the inner turn layer, and reducing the risk of central collapse and deformation of the electrode assembly, thereby effectively reducing lithium precipitation and prolonging the service life of the battery cell.

The electrode assembly described in the embodiments of the present disclosure is applicable for battery cells, batteries and electrical apparatuses using batteries.

The electrical apparatus may be a vehicle, mobile phone, portable device, notebook computer, ship, spacecraft, electric toy or power tool, etc. Vehicles may be fuel vehicles, gas vehicles or new energy vehicles, and new energy vehicles may be pure electric vehicles, hybrid electric vehicles or extended-range vehicles, etc. Spacecraft includes airplanes, rockets, space shuttles and spaceships, etc. Electric toys include fixed or mobile electric toys, such as game machines, electric car toys, electric ship toys and electric airplane toys, etc. Power tools include metal cutting power tools, grinding power tools, assembling power tools and railway power tools, such as electric drills, electric grinders, electric wrenches, electric screwdrivers, electric hammers, electric impact drills, concrete vibrators and electric planers. The embodiments of the present disclosure do not impose special restrictions on the above-mentioned electrical apparatus.

For the convenience of description, the following embodiments take a vehicle as the electrical apparatus for example.

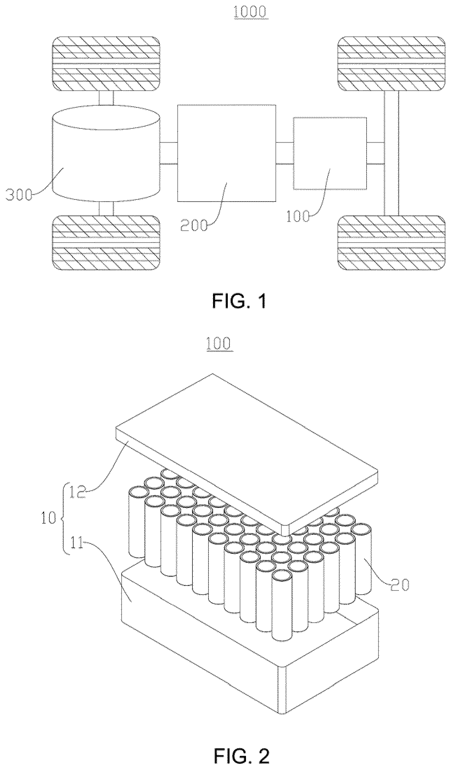

Please refer to FIG. 1, which is a structural schematic diagram of a vehicle 1000 provided by some embodiments of the present disclosure. A battery 100 is arranged inside the vehicle 1000, the battery 100 may be arranged at a bottom, head or tail of the vehicle 1000. The battery 100 may be used for power supply of the vehicle 1000. For example, the battery 100 may be used as an operating power supply of the vehicle 1000.

The vehicle 1000 may further include a controller 200 and a motor 300, and the controller 200 is configured for controlling the battery 100 to supply power to the motor 300, for example, for the working power demand of the vehicle 1000 when it is started, navigating and running.

In some embodiments of the present disclosure, the battery 100 may not only be used as an operating power supply for the vehicle 1000, but also be used as a driving power supply for the vehicle 1000, providing driving power for vehicle 1000 instead or partially instead of fuel oil or natural gas.

Please refer to FIG. 2, which is an exploded view of a battery 100 provided by some embodiments of the present disclosure. The battery 100 includes a case 10 and a battery cell 20, and the case 10 is configured for accommodating the battery cell 20.

Herein, the case 10 is a component for accommodating the battery cell 20, the case 10 provides an accommodating space for the battery cell 20, and the case 10 may have various structures. In some embodiments, the case 10 may include a first part 11 and a second part 12, and the first part 11 and the second part 12 are mutually covered to define an accommodating space for accommodating the battery cell 20. The first part 11 and the second part 12 may have various shapes, such as cuboids, cylinders, etc. The first part 11 may have a hollow structure with one side open, and the second part 12 may also have a hollow structure with one side open, wherein the open side of the second part 12 covers the open side of the first part 11, thus forming the case 10 with an accommodating space. Alternatively, the first part 11 may have a hollow structure with one side open, and the second part 12 may have a plate-like structure, wherein the second part 12 may cover the open side of the first part 11, thus forming the case 10 with an accommodating space. The first part 11 and the second part 12 may be sealed by a sealing element, which may be a sealing ring, sealant, etc.

In the battery 100, there may be one battery cell 20 or a plurality of battery cells 20. If there are a plurality of battery cells 20, the plurality of battery cells 20 may be connected in series or in parallel or in series parallel. A series-parallel connection means that there are both series and parallel connections among the plurality of battery cells 20. The plurality of battery cells 20 may be connected in series, in parallel or in series-parallel to form a battery module, and then a plurality of battery modules are connected in series, in parallel or in series-parallel to form a whole, which is accommodated in the case 10. Alternatively, all the battery cells 20 may be directly connected in series, parallel or in series-parallel together, and then all the battery cells 20 as a whole are accommodated in the case 10.

In some embodiments, the battery 100 may further include a bus component, and a plurality of battery cells 20 may be electrically connected through the bus component, so as to realize series connection, parallel connection or series-parallel connection of the plurality of battery cells 20. The bus component may be a conductor made of metal, such as copper, iron, aluminum, stainless steel, aluminum alloy, etc.

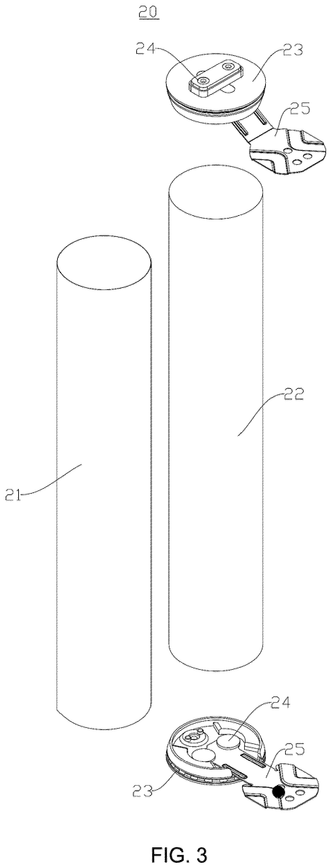

Please refer to FIG. 3, which is an exploded view of a battery cell 20 provided by some embodiments of the present disclosure. The battery cell 20 includes a housing 21, an electrode assembly 22 and an end cover 23.

The housing 21 is a component for accommodating the electrode assembly 22. The housing 21 may have a hollow structure with an opening at one end, and the housing 21 may have a hollow structure with openings at opposite two ends. The housing 21 may have various shapes, such as a cylinder, a cuboid, etc. The housing 21 may be made of various materials, such as copper, iron, aluminum, steel, aluminum alloy, etc.

The electrode assembly 22 is a component in the battery cell 20 where electrochemical reaction occurs. The electrode assembly 22 may include a positive pole piece, a negative pole piece and an isolating membrane 224. The positive pole piece may include a positive current collector and positive active substance layers coated on two opposite sides of the positive current collector. The negative pole piece may include a negative current collector and negative active substance layers coated on two opposite sides of the negative current collector. The electrode assembly 22 has a positive electrode tab and a negative electrode tab. The positive electrode tab may be a portion of the positive pole piece that is not coated with a positive active substance layer, and the negative electrode tab may be a portion of the negative pole piece that is not coated with a negative active substance layer.

The end cover 23 is a component for covering the opening of the housing 21 to isolate the internal environment of the battery cell 20 from the external environment. The shape of the end cover 23 may be adapted to the shape of the housing 21, for example, the end cover 23 may have a rectangular plate-like structure adapted to the housing 21, or the housing 21 may have a cylindrical structure, and the end cover 23 may has a circular plate-like structure adapted to the housing 21. The end cover 23 may also be made of various materials, such as copper, iron, aluminum, steel, aluminum alloy, etc.

In the battery cell 20, there may be one or two end covers 23. If the housing 21 has a hollow structure with an opening at one end, one end cover 23 may be provided correspondingly. If the housing 21 has a hollow structure with openings formed at both ends, two end covers 23 may be provided correspondingly, and the two end covers 23 cover the openings at both ends of the housing 21, respectively.

The end cover 23 may be provided with an electrode terminal 24, the electrode terminal 24 is configured for being electrically connected to the tab of the electrode assembly 22 to output the electric energy of the battery cell 20. The electrode terminal 24 and the tab of the electrode assembly 22 may be connected directly or indirectly.

As shown in FIG. 3, taking two end covers 23 provided in the battery cell 20 as an example, both end covers 23 are provided with electrode terminals 24. The electrode terminal 24 on one end cover 23 is a positive electrode terminal, and the electrode terminal 24 on the other end cover 23 is a negative electrode terminal. The positive electrode terminal is electrically connected to the positive electrode tab through one current collecting member 25, and the negative electrode terminal is electrically connected to the negative electrode tab through another current collecting member 25.

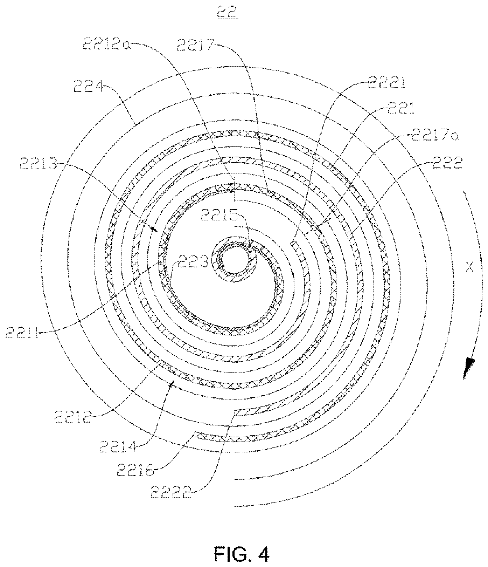

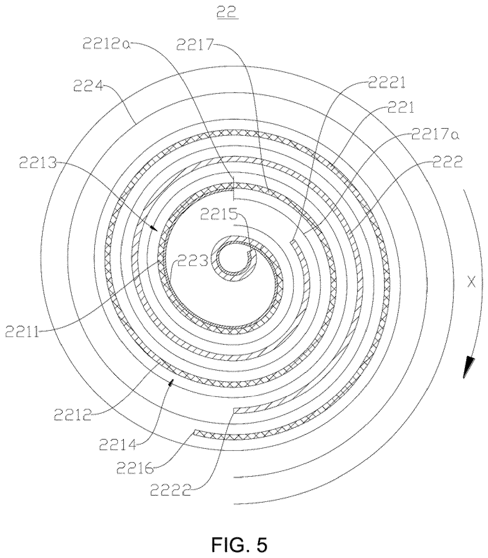

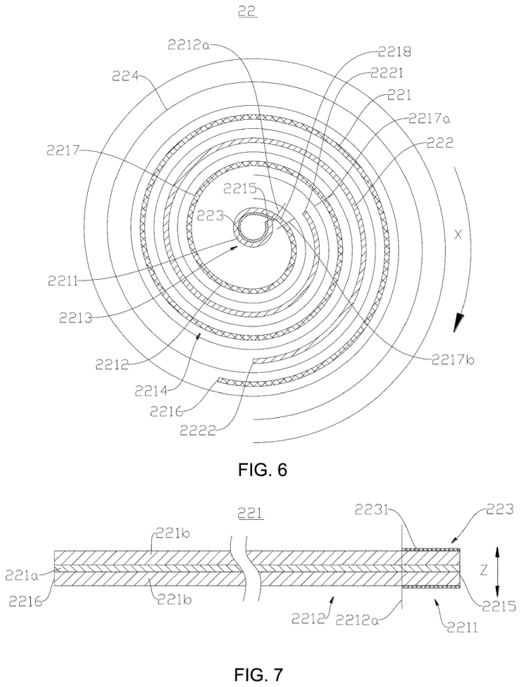

Please refer to FIGS. 4 to 6. FIG. 4 is a structural schematic diagram of the electrode assembly 22 provided by some embodiments of the present disclosure, FIG. 5 is a structural schematic diagram of the electrode assembly 22 provided by further embodiments of the present disclosure, and FIG. 6 is a structural schematic diagram of an electrode assembly 22 provided by yet further embodiments of the present disclosure. An embodiment of the present disclosure provides an electrode assembly 22, which includes a first pole piece 221 and a second pole piece 222 with opposite polarities, and the first pole piece 221 and the second pole piece 222 are stacked, and wound along the winding direction X to form a wound structure.

The first pole piece 221 has a first winding starting end 2215. The first pole piece 221 includes a first segment 2211 and a second segment 2212 which are continuously arranged along the winding direction X. The first segment 2211 is wound from the first winding starting end 2215 along the winding direction X to form an inner turn layer 2213, and the second segment 2212 is wound from a connecting position 2212a where it is connected to the first segment 2211 along the winding direction X to form an outer turn layer 2214, which is located outside the inner turn layer 2213. Herein, the first segment 2211 is provided with a reinforcing part 223, the reinforcing part 223 is wound to the connecting position 2212a along the winding direction X, and the reinforcing part 223 is configured for reinforcing the first segment 2211.

The polarities of the first pole piece 221 and the second pole piece 222 are opposite. It can be understood that one of the first pole piece 221 and the second pole piece 222 is a positive pole piece and the other is a negative pole piece. The first pole piece 221 may be a positive pole piece or a negative pole piece. Exemplarily, in FIGS. 4 to 6, the first pole piece 221 is a negative pole piece.

The electrode assembly 22 may further include an isolating membrane 224 for isolating the first pole piece 221 and the second pole piece 222. It can be understood that when the isolating membrane 224 is provided in the electrode assembly 22, the first pole piece 221, the isolating membrane 224 and the second pole piece 222 are sequentially stacked, and wound along the winding direction X to form a wound electrode assembly.

The winding direction X is a direction in which the first pole piece 221 and the second pole piece 222 are wound circumferentially from the inside to the outside. In FIGS. 4 to 6, the winding direction X is clockwise.

The first winding starting end 2215 is the end of the first pole piece 221 close to the central position of the electrode assembly 22. The first pole piece 221 is further provided with a first winding ending end 2216, and the first pole piece 221 extends from the first winding starting end 2215 to the first winding ending end 2216 along the winding direction X. The junction of the first segment 2211 and the second segment 2212 forms a connecting position 2212a. The first segment 2211 extends from the first winding starting end 2215 to the connecting position 2212a along the winding direction X, and the second segment 2212 extends from the connecting position 2212a to the first winding ending end 2216 along the winding direction X. The first segment 2211 is wound from the first winding starting end 2215 along the winding direction X to form an inner turn layer 2213, the inner turn layer 2213 has at least one turn of first pole piece 221, and the first segment 2211 forms one turn of first pole piece 221 of the inner turn layer 2213 every winding of 360 degrees from the first winding starting end 2215 along the winding direction X. The second segment 2212 is wound along the winding direction X from the connecting position 2212a where it is connected with the first segment 2211 to form an outer turn layer 2214, the outer turn layer 2214 has at least one turn of first pole piece 221, and the second segment 2212 forms one turn of first pole piece 221 of the outer turn layer 2214 every winding of 360 degrees from the connecting position along the winding direction X. Exemplarily, the number of turns of the outer turn layer 2214 is greater than that of the inner turn layer 2213. For example, the number of turns of the outer turn layer 2214 is twice or more than that of the inner turn layer 2213.

The reinforcing part 223 is wound along the winding direction X to the connecting position 2212a of the first segment 2211 and the second segment 2212. It can be understood that the tail end of the reinforcing part 223 along the winding direction X is aligned with the connecting position 2212a. The reinforcing part 223 is configured for reinforcing the first segment 2211, so that the overall deformation resistance of the first segment 2211 and the reinforcing part 223 is greater than the deformation resistance of the second segment 2212, so as to enhance the deformation resistance of the inner turn layer 2213. The reinforcing part 223 may be arranged on the inner surface of the first segment 2211, the outer surface of the first segment 2211, or between the current collector and the active substance layer of the first segment 2211.

In the embodiment of the present disclosure, the first segment 2211 of the first pole piece 221 is provided with the reinforcing part 223, the reinforcing part 223 has a reinforcing effect on the first segment 2211, thereby enhancing the deformation resistance of the first segment 2211, enabling the inner turn layer 2213 of the first pole piece 221 to form a strong self-supporting structure, enhancing the deformation resistance of the inner turn layer 2213, and reducing the risk of central collapse and deformation of the electrode assembly 22, thereby effectively reducing lithium precipitation and prolonging the service life of the battery cell 20.

In some embodiments, referring to FIG. 4, the reinforcing part 223 is partially beyond the first winding starting end 2215.

The portion of the reinforcing part 223 beyond the first winding starting end 2215 may be wound in the innermost turn of the inner turn layer 2213, so as to have a good supporting effect for the first segment 2211 and further reduce the risk of central collapse and deformation of the electrode assembly 22.

In this embodiment, since the reinforcing part 223 is partially beyond the first winding starting end 2215, the reinforcing part 223 covers the whole first segment 2211, the reinforcing part 223 has a good effect in reinforcing the whole first segment 2211 along the winding direction X, and the whole first segment 2211 has a good deformation resistance.

In some embodiments, referring to FIG. 5, the end of the reinforcing part 223 away from the connecting position 2212a along the winding direction X is aligned with the winding starting end.

The end of the reinforcing part 223 away from the connecting position 2212a along the winding direction X is the starting end of the reinforcing part 223, and the end of the reinforcing part 223 at the connecting position 2212a is the tail end. Along the winding direction X, the reinforcing part 223 is wound from the starting end to the tail end, which can also be understood as that the reinforcing part 223 extends from the starting end to the tail end along the winding direction X.

In this embodiment, since the end of the reinforcing part 223 away from the connecting position 2212a along the winding direction is aligned with the first winding starting end 2215, the reinforcing part 223 covers the whole first segment 2211, the reinforcing part 223 has a good effect in reinforcing the whole first segment 2211 along the winding direction X, and the whole first segment 2211 has a good deformation resistance.

In some embodiments, referring to FIGS. 4 and 5, the second pole piece 222 has a second winding starting end 2221. The first pole piece 221 includes a third segment 2217, which is wound from the first winding starting end 2215 along the winding direction X to a first alignment position 2217a aligned with the second winding starting end 2221. The first alignment position 2217a is adjacent to the second winding starting end 2221, and is located outside the second winding starting end 2221, and the first segment 2211 forms at least a portion of the third segment 2217.

The second winding starting end 2221 is the end of the second pole piece 222 close to the central position of the electrode assembly 22. The second pole piece 222 is further provided with a second winding ending end 2222, and the second pole piece 222 extends from the second winding starting end 2221 to the second winding ending end 2222 along the winding direction X.

The first segment 2211 forms at least a portion of the third segment 2217. It can be understood that a portion of the third segment 2217 may be the first segment 2211, or the whole third segment 2217 may be the first segment 2211. If the whole third segment 2217 is the first segment 2211, the connecting position 2212a of the first segment 2211 and the second segment 2212 is the first alignment position 2217a.

Exemplarily, the reinforcing part 223 is arranged on the inner surface of the third segment 2217.

In this embodiment, the first segment 2211 is formed on at least a portion of the third segment 2217, that is, the reinforcing part 223 is arranged on the third segment 2217. Since the third segment 2217 is wound from the first winding starting end 2215 along the winding direction X to the first alignment position 2217a aligned with the second winding starting end 2221, there is no second pole piece 222 opposite to it inside the third segment 2217, and the reinforcing part 223 is arranged on the third segment 2217, so that the third segment 2217 is not likely to hinder the transmission of ions (such as lithium ions) between the first pole piece 221 and the second pole piece 222.

In some embodiments, referring to FIG. 6, the third segment 2217 includes a beyond segment 2218 beyond the second winding starting end 2221. The beyond segment 2218 is wound from the first winding starting end 2215 along the winding direction X to a second alignment position 2217b aligned with the second winding starting end 2221, the second alignment position 2217b is adjacent to the second winding starting end 2221, and is located inside the second winding starting end 2221, and the first segment 2211 forms at least a portion of the beyond segment 2218.

When the first pole piece 221 and the second pole piece 222 are unfolded and stacked, the portion of the first pole piece 221 that is beyond the second winding starting end 2221 is the beyond segment 2218.

In the third segment 2217, one turn of the first pole piece 221 is formed from the second alignment position 2217b to the first alignment position 2217a, that is to say, the third segment 2217 winds 360 degrees from the second alignment position 2217b along the winding direction X to reach the first alignment position 2217a.

The first segment 2211 forms at least a portion of the beyond segment 2218. It can be understood that a portion of the beyond segment 2218 may be the first segment 2211, or the whole beyond segment 2218 may be the first segment 2211. If the whole beyond segment 2218 is the first segment 2211, the connecting position 2212a of the first segment 2211 and the second segment 2212 is the second alignment position 2217b.

In this embodiment, the first segment 2211 forms at least a portion of the beyond segment 2218, that is, the reinforcing part 223 is arranged on the beyond segment 2218. Since the third segment 2217 is wound from the second winding starting end 2221 along the winding direction X to the second alignment position 2217b aligned with the second winding starting end 2221, there is no second pole piece 222 opposite to it inside or outside the beyond segment, and the reinforcing part 223 is arranged on the beyond segment 2218, thereby further reducing the influence of the reinforcing part 223 on the ion transmission between the first pole piece 221 and the second pole piece 222. In addition, since the first segment 2211 forms at least a portion of the beyond segment 2218, the diameter of each turn in the inner turn layer 2213 formed by the first segment 2211 is smaller, which makes the center of the electrode assembly 22 more difficult to collapse.

In some embodiments, continuing to refer to FIGS. 4 to 6, the reinforcing part 223 is wound at least one turn along the winding direction X.

One turn of the reinforcing part 223 is formed every winding of 360 degrees along the winding direction X from its starting end.

In this embodiment, the reinforcing part 223 is wound at least one turn along the winding direction X, so that the reinforcing part 223 has a good effect in reinforcing the first segment 2211, and the first segment 2211 has a good deformation resistance.

In some embodiments, the reinforcing part 223 is wound one to five turns along the winding direction X.

The number of winding turns of the reinforcing part 223 may be equal to or greater than that of the first segment 2211. For example, the number of winding turns of the reinforcing part 223 and that of the first segment 2211 are both 1.5.

In the embodiment where the reinforcing part 223 is partially beyond the first winding starting end 2215, the number of winding turns of the reinforcing part 223 may be greater than that of the first segment 2211, for example, the number of winding turns of the first segment 2211 is 2 and the number of winding turns of the reinforcing part 223 is 3, wherein the portion of the reinforcing part 223 beyond the first winding starting end 2215 is wound one turn in the innermost turn of the inner turn layer 2213.

In this embodiment, the reinforcing part 223 is wound one to five turns along the winding direction X, which not only has a good effect in reinforcing the first segment 2211, but also makes the length of the reinforcing part 223 along the winding direction X not too long, thus reducing the space occupied by the reinforcing part and the influence of the reinforcing part 223 on the energy density of the battery cell 20.

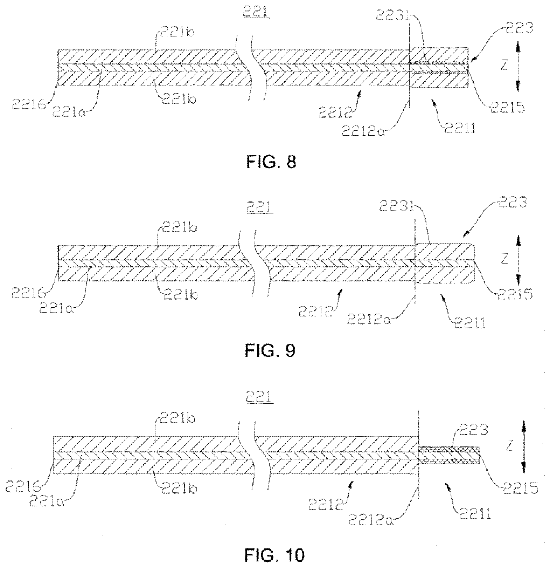

In some embodiments, please refer to FIGS. 7 and 8. FIG. 7 is a structural schematic diagram of the first pole piece 221 after being unfolded provided by some embodiments of the present disclosure, and FIG. 8 is a structural schematic diagram of the first pole piece 221 after being unfolded provided by some other embodiments of the present disclosure. The first pole piece 221 includes a first current collector 221a and a first active substance layer 221b, the first active substance layer 221b is arranged on the surface of the first current collector 221a in the thickness direction Z, and at least one side of the first current collector 221a in the thickness direction Z is provided with a reinforcing part 223. Referring to FIG. 7, the reinforcing part 223 is arranged on the side of the first active substance layer 221b of the first segment 2211 facing away from the first current collector 221a. Alternatively, referring to FIG. 8, the reinforcing part 223 is arranged between the first active substance layer 221b and the first current collector 221a of the first segment 2211.

The first current collector 221a is provided with a reinforcing part 223 on at least one side in the thickness direction Z. The reinforcing part 223 may be provided on one side of the first current collector 221a in the thickness direction Z or on both sides of the first current collector 221a in the thickness direction Z. In FIGS. 7 and 8, both sides of the first current collector 221a in the thickness direction Z are provided with reinforcing parts 223.

Exemplarily, the thickness of the first active substance layer 221b of the first segment 2211 is equal to the thickness of the first active substance layer 221b of the second segment 2212.

In this embodiment, if the reinforcing part 223 is arranged on the side of the first active substance layer 221b of the first segment 2211 facing away from the first current collector 221a, the reinforcing part 223 is located on the surface layer of the first segment 2211, which is convenient for arranging the reinforcing part 223 in the first segment 2211. If the reinforcing part 223 is arranged between the first active substance layer 221b and the first current collector 221a of the first segment 2211, the reinforcing part 223 is unlikely to hinder the transmission of ions of the first active substance layer 221b.

In some embodiments, continuing to refer to FIG. 7, the reinforcing part 223 is an adhesive layer 2231 arranged on the surface of the first active substance layer 221b of the first segment 2211 facing away from the first current collector 221a.

The adhesive layer 2231 may be a solid layer formed by solidification of glue coated on the surface of the first active substance layer 221b, or an adhesive tape, an adhesive tape, etc. adhered to the surface of the first active substance layer 221b.

In this embodiment, the reinforcing part 223 is an adhesive layer 2231, which is convenient to be arranged on the surface of the first active substance layer 221b. The adhesive layer 2231 is bonded to the surface of the first active substance layer 221b, and is not likely to separate from the first active substance layer 221b. The reinforcing part 223 always plays a good role in reinforcing the first segment 2211.

It should be noted that in the embodiment where the reinforcing layer is arranged between the first active substance layer 221b and the first current collector 221a of the first segment 2211, the reinforcing layer may also be the adhesive layer 2231.

In some embodiments, please refer to FIG. 9, which is a structural schematic diagram of the first pole piece 221 after being unfolded provided by further embodiments of the present disclosure. The reinforcing part 223 is a second active substance layer 2232 coated on the first active substance layer 221b of the first segment 2211. The total thickness of the second active substance layer 2232 and the first active substance layer 221b of the first segment 2211 is greater than that of the first active substance layer 221b of the second segment 2212.

The materials of the second active substance layer 2232 and the first active substance layer 221b may be the same or different. If the materials of the second active substance layer 2232 and the first active substance layer 221b are the same, the reinforcing part 223 can be regarded as the portion where the active substance layer of the first pole piece 221 in the first segment 2211 is beyond the active substance layer of the second segment 2212.

It should be noted that when it is mentioned that the materials of the second active substance layer 2232 and the first active substance layer 221b are the same, it means that the components of the second active substance layer 2232 and the first active substance layer 221b are the same, and the proportion of each component is also the same.

In this embodiment, the total thickness of the second active substance layer 2232 and the first active substance layer 221b of the first segment 2211 is greater than that of the first active substance layer 221b of the second segment 2212, so that the first segment 2211 is reinforced, which is simple to implement and has good economy. The second active substance layer 2232 is coated on the first active substance layer 221b, and the second active substance layer 2232 the first active substance layer 221b have a good integrity, so that the first segment 2211 has a good deformation resistance.

In some embodiments, the hardness of the reinforcing part 223 is greater than that of the first active substance layer 221b of the first segment 2211.

For example, when the reinforcing part 223 is the adhesive layer 2231, and the adhesive layer 2231 is formed by solidification of glue, the hardness of the adhesive layer 2231 formed after the solidification of glue is greater than that of the first active substance layer 221b of the first segment 2211.

It should be noted that in the embodiment where the second active substance layer 2232 is the reinforcing part 223, since the hardness of the reinforcing part 223 is greater than that of the first active substance layer 221b of the first segment 2211, the material of the second active substance layer 2232 may be different from that of the first active substance layer 221b, and the difference in hardness can be realized through active substance layers of different materials.

In this embodiment, since the hardness of the reinforcing part 223 is greater than that of the first active substance layer 221b of the first segment 2211, the reinforcing part 223 has a better deformation resistance than the first active substance layer 221b, and the reinforcing part 223 has a good effect in reinforcing the first segment 2211 to enhance the deformation resistance of the first segment 2211.

In some embodiments, please refer to FIG. 10, which is a structural schematic diagram of the first pole piece 221 after being unfolded provided by yet further embodiments of the present disclosure. The first pole piece 221 includes a first current collector 221a and a first active substance layer 221b, and the first active substance layer 221b is arranged on the surface of the first current collector 221a in the thickness direction Z. The first current collector 221a of the first segment 2211 is not provided with the first active substance layer 221b, the surface of the first current collector 221a of the first segment 2211 in the thickness direction Z is provided with a reinforcing part 223, and the hardness of the reinforcing part 223 is greater than that of the first active substance layer 221b of the second segment 2212.

It can be understood that in this embodiment, the surface of the first current collector 221a of the second segment 2212 in the thickness direction Z is provided with the first active substance layer 221b, while the surface of the first current collector 221a of the first segment 2211 in the thickness direction Z is not provided with the first active substance layer 221b.

In this embodiment, the reinforcing part 223 may also be an adhesive layer 2231. Certainly, the adhesive layer 2231 may be a solid layer formed by solidification of glue coated on the surface of the first current collector 221a, or an adhesive tape, an adhesive tape, etc. adhered to the surface of the first current collector 221a.

In this embodiment, the reinforcing part 223 has a reinforcing effect on the first current collector 221a of the first segment 2211, and the hardness of the reinforcing part 223 is greater than that of the first active substance layer 221b of the second segment 2212, so that the overall deformation resistance of the reinforcing part 223 and the first current collector 221a of the first segment 2211 is stronger than that of the second segment 2212, so as to enhance the deformation resistance of the inner turn layer 2213.

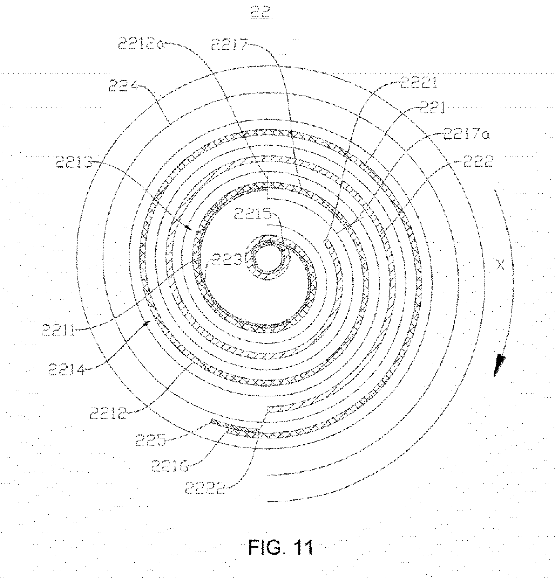

In some embodiments, please refer to FIG. 11, which is a structural schematic diagram of the electrode assembly 22 provided by some other embodiments of the present disclosure. The electrode assembly 22 further includes a protective member 225, the protective member 225 is arranged on the first pole piece 221 and stacked with the first pole piece 221. The first pole piece 221 is further provided with a first winding ending end 2216. Along the winding direction X, one end of the protective member 225 is aligned with the first winding ending end 2216 or the protective member 225 is partially beyond the first winding ending end 2216.

Exemplarily, in FIG. 11, along the winding direction X, the protective member 225 is partially beyond the first winding ending end 2216, and the protective member 225 is arranged on the inner surface of the first pole piece 221. The protective member 225 may be an adhesive tape, an adhesive tape, etc. adhered to the first pole piece 221.

The protective member 225 plays a protective role on the first winding ending end 2216 of the first pole piece 221, so as to reduce the risk of short circuit caused by a sharp part destroying the isolating membrane 224.

Certainly, a protective member 225 may also be provided on the second pole piece 222 to protect the second winding ending end 2222 of the second pole piece 222.

In some embodiments, continuing to refer to FIG. 11, the electrode assembly 22 has a cylindrical structure. The electrode assembly 22 is roughly cylindrical and may be applied to a cylindrical battery cell.

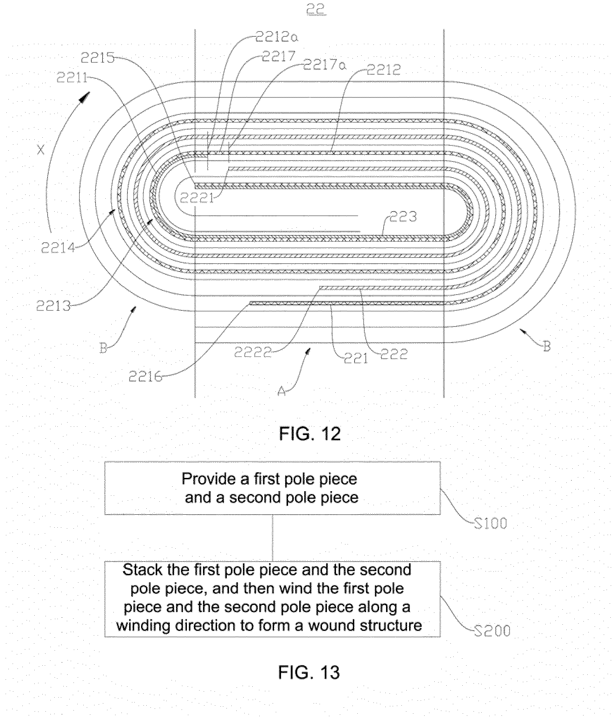

In some embodiments, please refer to FIG. 12, which is a structural schematic diagram of the electrode assembly 22 provided by yet other embodiments of the present disclosure. The electrode assembly 22 includes a flat area A and a bending area B connected to the flat area A. The reinforcing part 223 is at least partially located in the bending area B.

Exemplarily, the electrode assembly 22 has two bending areas B, the two bending areas B are connected to both ends of the flat area A, and the reinforcing part 223 bypasses the two bending areas B along the winding direction X.

The electrode assembly 22 provided in this embodiment may be applied to a square battery cell.

In this embodiment, the reinforcing part 223 is at least partially located in the bending area B, so that the portion of the first segment 2211 located in the bending area B has a good bending resistance, which reduces the risk of inward collapse of the pole pieces in the bending area B and effectively reduces lithium precipitation.

It should be noted that in this embodiment, the second pole piece 222 may also be provided with a reinforcing part 223 to reinforce the inner turn layer of the second pole piece 222.

An embodiment of the present disclosure provides a battery cell 20, which includes a housing and an electrode assembly 22 provided in any one of the above embodiments, and the housing is configured for accommodating the electrode assembly 22.

An embodiment of the present disclosure provides a battery 100, which includes a case 10, and the battery cell 20 provided in any one of the above embodiments. The case 10 is configured for accommodating the battery cell 20.

An embodiment of the present disclosure provides an electrical apparatus, which includes the battery 100 provided in any one of the above embodiments.

The electrical apparatus may be any one of the above-mentioned apparatuses using the battery 100.

In addition, please refer to FIG. 4. An embodiment of the present disclosure provides a cylindrical electrode assembly, which includes a positive pole piece, a negative pole piece and an isolating membrane 224. The positive pole piece, the isolating membrane 224 and the negative pole piece are sequentially stacked and wound along the winding direction X to form a wound electrode assembly. The negative pole piece has a first winding starting end 2215, and the negative pole piece includes a first segment 2211 and a second segment 2212 which are continuously arranged along the winding direction X. The first segment 2211 is wound from the first winding starting end 2215 along the winding direction X to form an inner turn layer 2213, and the second segment 2212 is wound from a connecting position 2212a where it is connected with the first segment 2211 along the winding direction X to form an outer turn layer 2214, which is located outside the inner turn layer 2213. Herein, the first segment 2211 is provided with an adhesive layer 2231, which is wound from the first winding starting end 2215 to the connecting position 2212a along the winding direction X. The adhesive layer 2231 is arranged on the inner surface of the first segment 2211, and is configured for reinforcing the first segment 2211.

In such an electrode assembly 22, the first segment 2211 of the negative pole piece is reinforced by the adhesive layer 2231, so that the inner turn layer 2213 of the negative pole piece forms a strong self-supporting structure, the deformation resistance of the inner turn layer 2213 of the negative pole piece is enhanced, and the risk of central collapse and deformation of the electrode assembly 22 is reduced, thereby effectively reducing lithium precipitation and prolonging the service life of the battery cell 20.

Please refer to FIG. 13, which is a flowchart of the method for manufacturing the electrode assembly 22 provided by some embodiments of the present disclosure. An embodiment of the present disclosure provides a method for manufacturing the electrode assembly 22, and the method includes:
S100: providing a first pole piece 221 and a second pole piece 222, wherein the polarities of the first pole piece 221 and the second pole piece 222 are opposite; and
S200: stacking the first pole piece 221 and the second pole piece 222, and winding them along the winding direction X to form a wound structure.

The first pole piece 221 has a first winding starting end 2215, and the first pole piece 221 includes a first segment 2211 and a second segment 2212 which are continuously arranged along the winding direction X. The first segment 2211 is wound from the first winding starting end 2215 along the winding direction X to form an inner turn layer 2213, and the second segment 2212 is wound from the connecting position 2212a where it is connected with the first segment 2211 along the winding direction X to form an outer turn layer 2214, which is located outside the inner turn layer 2213. The first segment 2211 is provided with a reinforcing part 223. The reinforcing part 223 is wound to the connecting position 2212a along the winding direction X, and the reinforcing part 223 is configured for reinforcing the first segment 2211.

It should be noted that the related structure of the electrode assembly 22 manufactured by the manufacturing method provided in the above embodiments can be referred to the electrode assembly 22 provided in the above embodiments, and will not be repeated here.

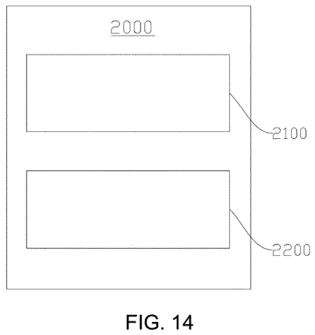

Please refer to FIG. 14, which is a schematic block diagram of an apparatus for manufacturing the electrode assembly 22 provided by some embodiments of the present disclosure. The embodiment of the present disclosure further provides an apparatus 2000 for manufacturing the electrode assembly 22, the apparatus 2000 includes a providing device 2100 and an assembling device 2200.

The providing device 2100 is configured for providing a first pole piece 221 and a second pole piece 222, and the polarities of the first pole piece 221 and the second pole piece 222 are opposite. The assembling device 2200 is configured for stacking the first pole piece 221 and the second pole piece 222 and winding them along the winding direction X to form a wound structure.

The first pole piece 221 has a first winding starting end 2215, and the first pole piece 221 includes a first segment 2211 and a second segment 2212 which are continuously arranged along the winding direction X. The first segment 2211 is wound from the first winding starting end 2215 along the winding direction X to form an inner turn layer 2213, and the second segment 2212 is wound from the connecting position 2212a where it is connected with the first segment 2211 along the winding direction X to form an outer turn layer 2214, which is located outside the inner turn layer 2213. The first segment 2211 is provided with a reinforcing part 223. The reinforcing part 223 is wound to the connecting position 2212a along the winding direction X, and the reinforcing part 223 is configured for reinforcing the first segment 2211.

It should be noted that the related structure of the electrode assembly 22 manufactured by the manufacturing apparatus 2000 provided in the above embodiments can be referred to the electrode assembly 22 provided in the above embodiments, and will not be repeated here.

It should be noted that the embodiments in the present disclosure and the features in the embodiments may be combined with each other if not conflicted.

The above embodiments are only intended to illustrate the technical solutions of the present disclosure, and are not intended to limit the present disclosure. For those skilled in the art, various modifications and variations may be made to the embodiments of the present disclosure. Any modification, equivalent replacement, improvement, etc. made within the spirit and principles of the present disclosure shall fall within the scope of protection of the present disclosure.

## Claims

1. An electrode assembly, comprising a first pole piece and a second pole piece, wherein polarities of the first pole piece and the second pole piece are opposite, the first pole piece and the second pole piece are stacked, and are wound in a winding direction to form a wound structure;
the first pole piece has a first winding starting end, the first pole piece comprises a first segment and a second segment which are continuously arranged along the winding direction, the first segment is wound from the first winding starting end along the winding direction to form an inner turn layer, the second segment is wound from a connecting position where it is connected with the first segment along the winding direction to form an outer turn layer, and the outer turn layer is located outside the inner turn layer, and
wherein the first segment is provided with a reinforcing part, the reinforcing part is wound to the connecting position along the winding direction, and the reinforcing part is configured for reinforcing the first segment.

2. The electrode assembly according to claim 1, wherein the reinforcing part is partially beyond the first winding starting end, or one end of the reinforcing part which is away from the connecting position along the winding direction is aligned with the first winding starting end.

3. The electrode assembly according to claim 1 or 2, wherein the second pole piece has a second winding starting end; and
the first pole piece comprises a third segment, which is wound from the first winding starting end along the winding direction to a first alignment position aligned with the second winding starting end, wherein the first alignment position is adjacent to the second winding starting end, and is located outside the second winding starting end, and the first segment forms at least a portion of the third segment.

4. The electrode assembly according to claim 3, wherein the third segment comprises a beyond segment beyond the second winding starting end, the beyond segment is wound from the first winding starting end along the winding direction to a second alignment position aligned with the second winding starting end, wherein the second alignment position is adjacent to the second winding starting end, and is located inside the second winding starting end, and the first segment forms at least a portion of the beyond segment.

5. The electrode assembly according to any one of claims 1 to 4, wherein the reinforcing part is wound at least one turn along the winding direction.

6. The electrode assembly according to claim 5, wherein the reinforcing part is wound one to five turns along the winding direction.

7. The electrode assembly according to any one of claims 1 to 6, wherein the first pole piece comprises a first current collector and a first active substance layer, wherein the first active substance layer is arranged on a surface of the first current collector in a thickness direction, and at least one side of the first current collector in the thickness direction is provided with the reinforcing part; and
the reinforcing part is arranged on one side of the first active substance layer of the first segment facing away from the first current collector, or the reinforcing part is arranged between the first active substance layer and the first current collector of the first segment.

8. The electrode assembly according to claim 7, wherein the reinforcing part is an adhesive layer arranged on a surface of the first active substance layer of the first segment facing away from the first current collector.

9. The electrode assembly according to claim 7, wherein the reinforcing part is a second active substance layer coated on the first active substance layer of the first segment; and
a total thickness of the second active substance layer and the first active substance layer of the first segment is greater than a thickness of the first active substance layer of the second segment.

10. The electrode assembly according to any one of claims 7 to 9, wherein a hardness of the reinforcing part is greater than a hardness of the first active substance layer of the first segment.

11. The electrode assembly according to any one of claims 1 to 6, wherein the first pole piece comprises a first current collector and a first active substance layer, and the first active substance layer is arranged on a surface of the first current collector in a thickness direction; and
the first current collector of the first segment is not provided with the first active substance layer, the surface of the first current collector of the first segment in the thickness direction is provided with the reinforcing part, and a hardness of the reinforcing part is greater than a hardness of the first active substance layer of the second segment.

12. The electrode assembly according to any one of claims 1 to 11, wherein the electrode assembly further comprises a protective member arranged on the first pole piece and stacked with the first pole piece; and
the first pole piece is further provided with a first winding ending end, and along the winding direction, one end of the protective member is aligned with the first winding ending end, or the protective member is partially beyond the first winding ending end.

13. The electrode assembly according to any one of claims 1 to 12, wherein the electrode assembly has a cylindrical structure.

14. The electrode assembly according to any one of claims 1 to 12, wherein the electrode assembly comprises a flat area and a bending area connected to the flat area; and
the reinforcing part is at least partially located in the bending area.

15. A battery cell, comprising:
the electrode assembly according to any one of claims 1 to 14; and
a housing, configured for accommodating the electrode assembly.

16. A battery, comprising:
the battery cell according to claim 15; and
a case, configured for accommodating the battery cell.

17. An electrical apparatus, comprising the battery according to claim 16.

18. A method for manufacturing an electrode assembly, comprising:
providing a first pole piece and a second pole piece, wherein polarities of the first pole piece and the second pole piece are opposite; and
stacking the first pole piece and the second pole piece, and then winding the first pole piece and the second pole piece along a winding direction to form a wound structure,
wherein the first pole piece has a first winding starting end, the first pole piece comprises a first segment and a second segment which are continuously arranged along the winding direction, the first segment is wound from the first winding starting end along the winding direction to form an inner turn layer, the second segment is wound from a connecting position where it is connected with the first segment along the winding direction to form an outer turn layer, and the outer turn layer is located outside the inner turn layer; and the first segment is provided with a reinforcing part, the reinforcing part is wound to the connecting position along the winding direction, and the reinforcing part is configured for reinforcing the first segment.

19. An apparatus for manufacturing an electrode assembly, comprising:
a providing device, configured for providing a first pole piece and a second pole piece, wherein polarities of the first pole piece and the second pole piece are opposite; and
an assembling device, configured for stacking the first pole piece and the second pole piece, and then winding the first pole piece and the second pole piece along a winding direction to form a wound structure,
wherein the first pole piece has a first winding starting end, the first pole piece comprises a first segment and a second segment which are continuously arranged along the winding direction, the first segment is wound from the first winding starting end along the winding direction to form an inner turn layer, the second segment is wound from a connecting position where it is connected with the first segment along the winding direction to form an outer turn layer, and the outer turn layer is located outside the inner turn layer; and the first segment is provided with a reinforcing part, the reinforcing part is wound to the connecting position along the winding direction, and the reinforcing part is configured for reinforcing the first segment.
